# EUROPEAN PATENT APPLICATION

(11) **EP 3 879 932 A1**
(43) Date of publication of application: **15.09.2021**
(21) Application number: 21162100.8
(22) Date of filing: 11.03.2021
(51) Int. Cl.: H05B 6/12

(54) **ELECTRIC RANGE**

(30) Priority: 12.03.2020 KR 20200030997
(71) Applicant: LG Electronics Inc., Seoul 07336 (KR)
(72) Inventor: PARK, Il Young, 08592 Seoul (KR); LEE, Jaeho, 08592 Seoul (KR); KIM, Seunghak, 08592 Seoul (KR)
(74) Representative: Ter Meer Steinmeister & Partner

(57) **Abstract**

The present disclosure relates to an electric range. In the electric range, a lower surface of a base plate on which a working coil is disposed may be supported along a widthwise direction of the base plate, thereby preventing a bend of the base plate and absorbing an external impact applied to the base plate. Additionally, in the electric range, a gap between a working coil on a base plate and an object to be heated on/over the working coil may be maintained.

## Description

### BACKGROUND

### 1. Field of Invention

Disclosed herein is an electric range.

### 2. Description of the Related Art

Various types of cooking appliances are used to heat food at homes or restaurants. The cooking appliances include gas ranges using gas and electric ranges using electricity.

The electric ranges are classified as resistance heating-type electric ranges and induction heating-type electric ranges.

In a resistance heating method, electric current is supplied to a metallic resistance wire or a non-metallic heat generation element such as silicon carbide to generate heat, and the generated heat is radiated or conducted to heat an object to be heated (e.g., a cooking vessel such as a pot, a frying pan and the like).

In an induction heating method, high-frequency power is supplied to a coil to generate a magnetic field around the coil, and eddy current produced in the generated magnetic field is used to heat an object to be heated made of a metallic material.

When electric current is supplied to a working coil or a heating coil, heat is generated while an object to be heated is inductively heated. The object to be heated is heated by the generated heat.

A working coil of an electric range of the related art, configured as described above, is disposed at an upper end of a base plate made of aluminum. The base plate is disposed at an upper end of a case constituting a space in which a substrate and electronic parts are disposed.

The working coil is made of a metallic material and has a predetermined weight. In the related art, elastic rods elastically supporting edges of the base plate are disposed in the case to support the base plate. When the working coil is disposed at an upper end of a center of the base plate, the center of the base plate bends downward.

Additionally, when each of the elastic rods has a different elastic force, the base plate tilts to one side without ensuring a balance.

Thus, in the related art, a constant gap between an object to be heated, mounted onto a cover disposed on the base plate, and a working coil cannot be ensured.

### SUMMARY OF INVENTION

The present disclosure is directed to an electric range in which a lower portion of a base plate on which a working coil is disposed is prevented from sagging.

The present disclosure is also directed to an electric range in which absorbs an external impact applied to the base plate on which a working coil is disposed.

The present disclosure is also directed to an electric range having a reinforced structure to preventing deformation of the case or bracket.

Aspects are not limited to the above ones, and other aspects and advantages that are not mentioned above can be clearly understood from the following description and can be more clearly understood from the embodiments set forth herein. Additionally, the aspects and advantages of the present disclosure can be realized via means and combinations thereof that are described in the appended claims.

The object is solved by the features of the independent claims. Preferred embodiment are given in the dependent claims.

In the electric range according to the present disclosure, an electric range is provided, comprising: a case being open in an upper portion, the case provides an inner space; a bottom surface of the inner space of the case; a base plate disposed inside the case separating the inner space of the case into the upper portion and a lower portion; a working coil disposed in the upper portion on the base plate; and a supporter disposed in the lower portion on the bottom surface of the inner space of the case, wherein the supporter is configured to support a lower end of the base plate.

Thus, a lower end of the base plate, which allows a working coil to be placed at an upper end thereof, may be supported by a supporter along a widthwise direction of the base plate, thereby preventing a bend of the base plate and maintaining a constant gap between an object to be heated and the working coil. Widthwise direction may be a direction along the short side walls of the case.

In the electric range, the supporter may be formed as a bracket having a predetermined length and may stably support a lower end of a base plate.

In the electric range, one or more elastic members may be disposed between the bracket and the base plate and may elastically support one or more positions of a lower end of a base plate.

The electric range may be provided with a reinforcing body bent at the bracket to prevent deformation of the bracket itself.

In some or more embodiments, which can be combined with the other embodiments, the electric range, comprises a case, an upper portion of which is open, the case has an inner space; a base plate disposed in the upper portion of the case; a working coil disposed on the base plate; and a supporter which is disposed on a bottom surface of the inner space of the case, and an upper end of which supports a lower end of the base plate along a widthwise direction of the base plate.

In some or more embodiments, which can be combined with the other embodiments, the supporter may comprise a bracket, both ends of which are supported by the bottom surface of the inner space of the case.

In some or more embodiments, which can be combined with the other embodiments, one or more elastic members may be disposed at one or more positions of an upper end of the bracket and may be configured to elastically support a bottom surface of the base plate.

In some or more embodiments, which can be combined with the other embodiments, the bracket may have a linear shape.

In some or more embodiments, which can be combined with the other embodiments, the bracket may comprise a bracket body having a predetermined length and width and having a linear shape.

In some or more embodiments, which can be combined with the other embodiments, a pair of support bodies may be bent at both ends of the bracket body.

In some or more embodiments, which can be combined with the other embodiments, the plurality of elastic members may be disposed at an upper end of the bracket body.

In some or more embodiments, which can be combined with the other embodiments, the pair of support bodies may be fixed onto the bottom surface of the inner space of the case.

In some or more embodiments, which can be combined with the other embodiments, a fixing member may be formed as a plate and/or may have a coupling hole.

In some or more embodiments, which can be combined with the other embodiments, a fixing member may be respectively provided at lower ends of the pair of support bodies.

In some or more embodiments, which can be combined with the other embodiments, each fixing member may be fixed by a coupling member on the bottom surface of the inner space of the case.

In some or more embodiments, which can be combined with the other embodiments, the bracket body may have a reinforcing body having a plate shape and bent along a downward direction.

In some or more embodiments, which can be combined with the other embodiments, the reinforcing body may be formed in a surface portion of one side or in a surface portion of the other side or in surface portions of both sides of the bracket body.

In some or more embodiments, which can be combined with the other embodiments, a lower end of the reinforcing member may be spaced a predetermined distance apart from the bottom surface of the inner space of the case.

In some or more embodiments, which can be combined with the other embodiments, each of the plurality of elastic members may be formed into a leaf spring spreading apart in a V shape.

In some or more embodiments, which can be combined with the other embodiments, a position of each of the plurality of elastic members may change along a guide groove formed on the upper end of the bracket.

In some or more embodiments, which can be combined with the other embodiments, a plurality of supporters may support different positions of the lower end of the base plate.

In some or more embodiments, which can be combined with the other embodiments, a plurality of base plates may be disposed at the upper end of the case in a way that the plurality of base plates is adjacent to each other.

In some or more embodiments, which can be combined with the other embodiments, a plurality of supporter may be disposed to support a lower end of each of the base plates.

In some or more embodiments, which can be combined with the other embodiments, an air guide may be disposed in the inner space of the case, and an upper end of the air guide supports a bottom surface of the base plate.

In some or more embodiments, which can be combined with the other embodiments, the working coil may be disposed in a central portion of the base plate, and the supporter is disposed to support a lower end of the central portion of the base plate.

According to the present disclosure, which can be combined with the other embodiments, a lower portion of a base plate on which a working coil is disposed may be supported, thereby preventing sagging of the base plate.

According to the present disclosure, a constant gap between an object to be heated and a working coil may be maintained, thereby preventing heat generation of the working coil as well as ensuring uniformity in heating of the object to be heated.

According to the present disclosure, an elastic member may elastically support a lower portion of a base plate on which a working coil is disposed, thereby absorbing an external impact applied to the base plate.

According to the present disclosure, a bracket itself, which supports a lower portion of a base plate, may be reinforced, thereby preventing deformation of the bracket.

Specific effects are described along with the above-described effects in the section of Detailed Description.

### BRIEF DESCRIPTION OF DRAWING

The accompanying drawings constitute a part of the specification, illustrate one or more embodiments in the disclosure, and together with the specification, explain the disclosure, wherein:
FIG. 1 is a perspective view showing an electric range according to the present disclosure;
FIGS. 2 to 5 are perspective views showing the electric range in FIG. 1 without some components;
FIG. 6 is a perspective view showing an electric range having supporters of the present disclosure;
FIG. 7 is a perspective view showing a bracket according to the present disclosure;
FIG. 8 is another perspective view showing the bracket according to the present disclosure;
FIG. 9 is a perspective view showing an elastic member according to the present disclosure;
FIG. 10 is a perspective view showing a configuration in which a supporter according to the present disclosure elastically supports a lower portion of a base plate; and
FIG. 11 is a view showing an example in which a position of an elastic member according to the present disclosure can change at an upper end of a bracket.

### DETAILED DESCRIPTION OF EXEMPLARY EMBODIMENT

The above-described aspects, features and advantages are specifically described hereunder with reference to the accompanying drawings such that one having ordinary skill in the art to which the present disclosure pertains can easily implement the technical spirit of the disclosure. In the *disclosure, detailed description* of known technologies in relation to the disclosure *is* omitted if it is deemed to *make* the *gist* of the *disclosure* unnecessarily *vague.* Below, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components should not be limited by the terms. Certainly, a first component can be a second component unless stated to the contrary.

When one component is described as being "in an upper portion (or a lower portion)" of another component, or "on (or under)" another component, one component can be placed on the upper surface (or under the lower surface) of another component, and an additional component may be interposed between another component and one component on (or under) another component.

When one component is described as being "connected", "coupled", or "connected" to another component, one component can be directly connected, coupled or connected to another component. However, it is also to be understood that an additional component can be "interposed" between the two components, or the two components can be "connected", "coupled", or "connected" through an additional component.

Throughout the disclosure, each component can be provided as a single one or a plurality of ones, unless explicitly stated to the contrary.

The singular forms "a", "an" and "the" are intended to include the plural forms as well, unless explicitly indicated otherwise. It should be further understood that the terms "comprise" or "have" and the like, set forth herein, are not interpreted as necessarily including all the stated components or steps but can be interpreted as including some of the stated components or steps or can be interpreted as further including additional components or steps.

Throughout the disclosure, the terms "A and/or B" as used herein can denote A, B or A and B, and the terms "C to D" can denote C or greater and D or less, unless stated to the contrary.

Below, an electric range is described with reference to several embodiments.

The electric range in the disclosure may include an electric resistance-type electric range and an induction heating-type electric range (i.e., an electric range). For convenience, an electric range, provided with a working coil as a heating unit, is described as an example during description of the embodiments. However, embodiments are not limited to those set forth herein.

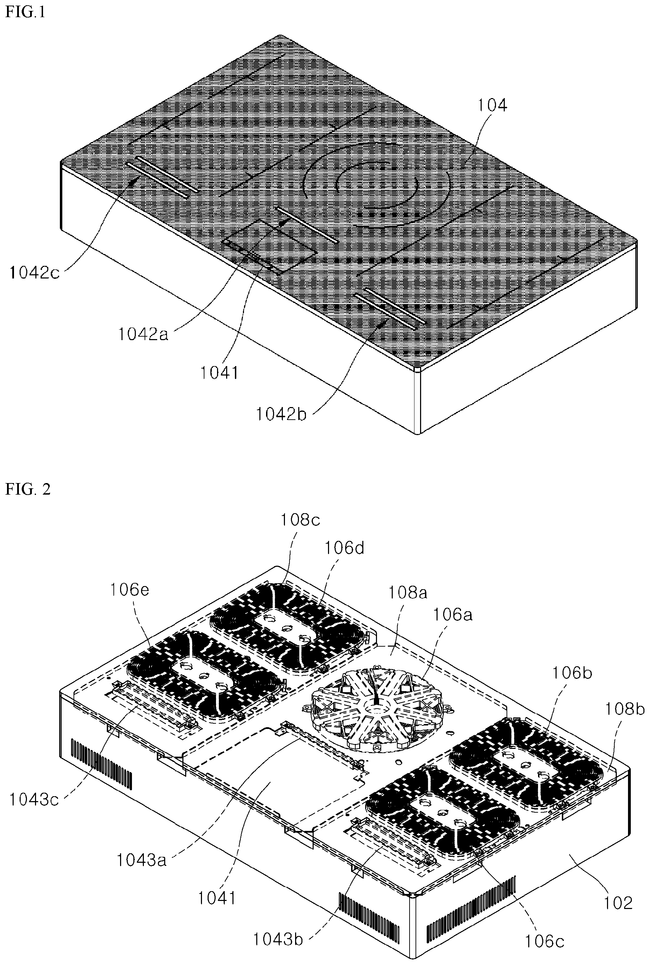

FIG. 1 is a perspective view showing an electric range 100 according to the present disclosure. FIGS. 2 to 5 are perspective views showing the electric range 100 in FIG. 1 without some components.

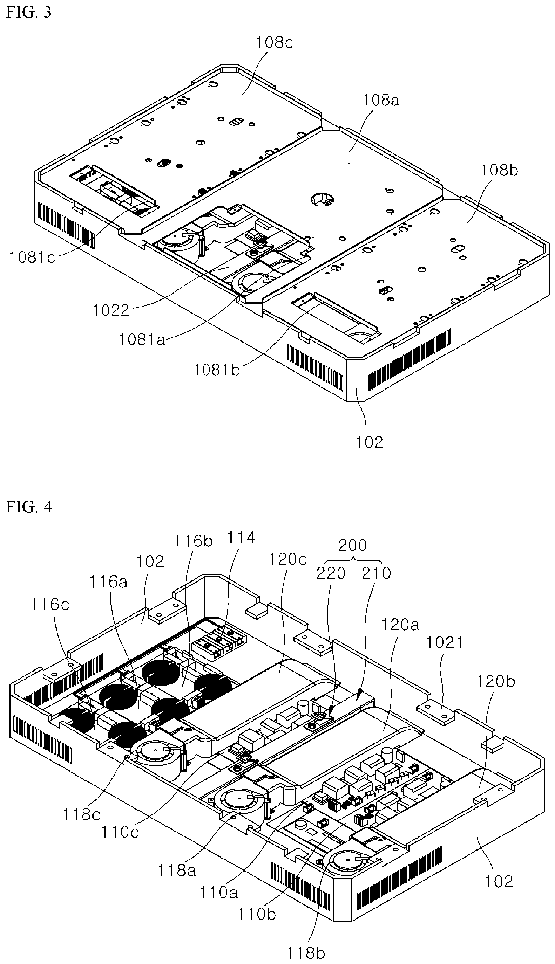

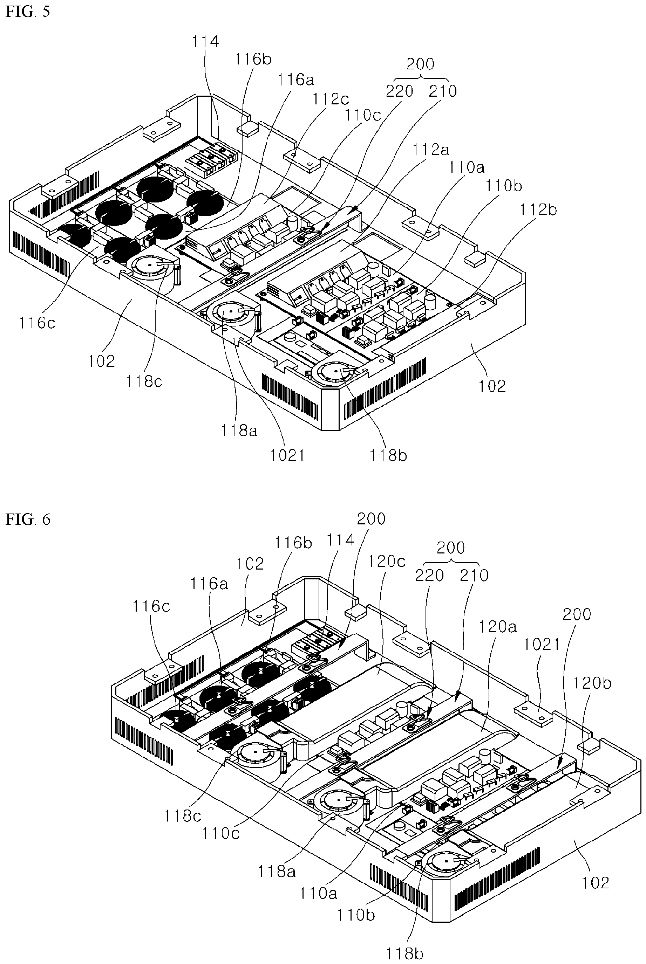

Specifically, FIG. 2 is a view showing the electric range 100 in FIG. 1 without a cover plate 104, FIG. 3 is a view showing the electric range 100 in FIG. 1 without a cover plate 104 and a working coil 106a, 106b, 106c, 106d, 106e, FIG. 4 is a view showing the electric range 100 in FIG. 1 without a cover plate 104, a working coil 106, and a base plate 108a, 108b, 108c, and FIG. 5 is a view showing the electric range 100 in FIG. 1 without a cover plate 104, a working coil 106, a base plate 108a, 108b, 108c and an air guide 120a, 120b, 120c.

Referring to FIGS. 1 to 5, the electric range 100 according to one embodiment may include a case 102, a cover plate 104, a working coil 106a, 106b, 106c, 106d, 106e, a base plate 108a, 108b, 108c.

Furthermore, the electric range 100 according to one embodiment may include a driving circuit 110a, 110b, 110c, a heat sink 112a, 112b, 112c, a power feeder 114, a filter circuit 116a, 116b, 116c, an air blowing fan 118a, 118b, 118c, and air guides 120a, 120b, 120c.

The case 102 may protect components in the electric range 100. For example, the case 102 may be made of aluminum or any other suited metal but not limited. The case 102 may be thermally insulated to prevent heat, generated by the working coil 106a, 106b, 106c, 106d, 106e, from leaking outward. The case 102 is formed to have a predetermined height. The case 102 has two short side portions and two long side portion being connected or integrally formed to form a frame which surrounds the inner space. The case 102 is open at its upper portion and may be closed at the bottom surface 102b with a bottom plate.

The cover plate 104 may be coupled to an upper end of the case 102 to shield an inside of the case 102, and an object to be heated (not illustrated, an object to be heated by at least one of the working coils 106a, 106b, 106c, 106d, 106e) may be placed on an upper surface of the cover plate 104.

An object to be heated such as a cooking vessel may be placed on the upper surface of the cover plate 104, and heat generated by the working coil 106a, 106b, 106c, 106d, 106e may be delivered to the object to be heated through the upper surface of the cover plate104.

The cover plate 104 may be made of glass but not limited.

An input interface 1041 configured to receive an input from a user may be disposed on the upper surface of the cover plate 104. The input interface 1041 may be buried into the upper surface of the cover plate 104 in a flat manner and/or may display a specific image. The input interface 1041 may receive a touch input from the user, and the electric range 100 may be driven based on the received touch input.

Specifically, the input interface 1041 may be a module for controlling the operation the electric range, in particular by inputting a heating intensity and/or a heating period and the like desired by the user, and may be implemented as a physical button or a touch panel and the like or a combination thereof. Additionally, the input interface 1041 may display a driving state of the electric range 100.

For example, the input interface 1041 may include a liquid crystal display (TFT LCD) and LED or a OLED but not limited.

Light display areas 1042a, 1042b, 1042c may be formed on the upper surface of the cover plate 104. Light source units 1043a, 1043b, 1043c may be disposed under/below the cover plate 104, and light emitted from the light source units 1043a, 1043b, 1043c may be delivered to the user through the light display areas 1042a, 1042b, 1042c.

The working coil 106a, 106b, 106c, 106d, 106e may be a heating unit that heats an object to the heated, and may be disposed in the case 102.

The working coil 106a, 106b, 106c, 106d, 106e may include a wire that is wound multiple times in a ring shape, and may generate an AC magnetic field. Additionally, a mica sheet and/or a ferrite core may be consecutively disposed on a lower side of the working coil 106a, 106b, 106c, 106d, 106e.

The ferrite core may be fixed to the mica sheet through a sealant, and may diffuse the AC magnetic field generated by the working coil 106a, 106b, 106c, 106d, 106e. The mica sheet may be fixed to the working coil 106a, 106b, 106c, 106d, 106e and the ferrite core through the sealant, and may prevent a direct delivery of the heat, generated by the working coil 106a, 106b, 106c, 106d, 106e, to the ferrite core.

A plurality of working coils 106a, 106b, 106c, 106d, 106e may be provided. The plurality of working coils 106a, 106b, 106c, 106d, 106e may include a first working coil 106a disposed in a central portion of the case 102, a second working coil 106b and/or a third working coil 106c disposed on a right side of the first working coil 106a, and a fourth working coil 106d and/or a fifth working coil 106e disposed on a left side of the first working coil 106a. The position and number of the working coils is not limited. The second working coil 106b and/or the third working coil 106c may be disposed on the right side of the first working coil 106a in an up-down direction, and the fourth working coil 106d and/or the fifth working coil 106e may be disposed on the left side of the first working coil 106a in the up-down direction.

For example, the first working coil 106a may be a high-output dual heating coil.

The second working coil 106b, the third working coil 106c, the fourth working coil 106d and/or the fifth working coil 106e may be a single heating coil.

The first working coil 106a as a dual heating coil may be heavy and may have a maximum output of 7000 kW.

The electric range 100 according to one embodiment may perform the function of wireless power transmission based on the configurations and features described above.

Technologies for wirelessly supplying power have been developed and have been used for a wide range of electronic devices. A battery of an electronic device, to which the wireless power transmitting technology is applied, can be charged only by being placed on a charge pad without connecting to an additional charge connector. Accordingly, the electronic device, to which the wireless power transmitting technology is applied, requires no cord or no charger, thereby ensuring improved mobility and a reduced size and weight.

The wireless power transmitting technology can be broadly classified as an electromagnetic induction technology using a coil, a resonance technology using resonance, and a radio emission technology for converting electric energy into microwaves and delivering the microwaves, and the like. In the electromagnetic induction technology, power is transmitted using electromagnetic induction between a primary coil (e.g., a working coil) included in an apparatus for wirelessly transmitting power and a secondary coil included in an apparatus for wirelessly receiving power.

The theory of the induction heating technology of the electric range 100 is substantially the same as that of the electromagnetic induction-based wireless power transmission technology, in that an object to be heated is heated using electromagnetic induction. Accordingly, the electric range 100 according to one embodiment may perform the function of wireless power transmission as well as the function of induction heating.

The base plate 108a, 108b, 108c may be disposed at a middle end of the case 102. So the one or more base plates may separate the inner space of the case into a lower portion and an upper portion. The upper portion is for accommodating the working coils. The lower portions is provided for accommodating the electronic components.

The plurality of working coils 106a, 106b, 106c, 106d, 106e may be disposed on the base plates 108a, 108b, 108c. The base plate 108a, 108b, 108c may support the plurality of working coils 106a, 106b, 106c, 106d, 106e that are heavy, and may help the plurality of working coils 106a, 106b, 106c, 106d, 106e to be mounted. The input interface 1041 and the light source unit 1043a, 1043b, 1043c may be further disposed on/in the upper portion of the base plate 108a, 108b, 108c.

According to one embodiment, a plurality of base plates 108a, 108b, 108c may be provided but not limited. Alternatively, a single base plate may be disposed in the case 102.

According to one embodiment, the plurality of base plates 108a, 108b, 108c may include a first base plate 108a, a second base plate 108b, and a third base plate 108c.

The first base plate 108a, the second base plate 108b, and the third base plate 108c may be disposed at the middle end of the case 102 side by side. Middle end means a position lower than the upper edge of the case and higher as the bottom surface of the case.

The first base plate 108a may be disposed in a central portion of the middle end of the case 102. The first working coil 106a may be disposed on the first base plate 108a.

The input interface 1041, and a first light source unit 1043a corresponding to the first working coil 106a may be further disposed on/in the upper portion of the first base plate 108a. On/In the upper portion of the first base plate 108a, the input interface 1041 may be disposed on a lower side of the first light source unit 1043a, and the first light source unit 1043a may be disposed on a lower side of the input interface 1041. The first base plate 108a may have a through hole 1081a for installing the input interface 1041 and the first light source unit 1043a.

The second base plate 108b may be disposed on a right side of the first base plate 108a at the middle end of the case 102. The second working coil 106b and the third working coil 106c may be disposed on/in an upper portion of the second base plate 108b.

A second light source unit 1043b corresponding to the second working coil 106b and the third working coil 106c may be further disposed on/in the upper portion of the second base plate 108b. On/In the upper portion of the second base plate 108b, the second working coil 106b, the third working coil 106c and the second light source unit 1043b may be consecutively disposed. The second base plate 108b may have a through hole 1081b for installing the second light source unit 1043b.

The third base plate 108c may be disposed on a left side of the first base plate 108a at the middle end of the case 102. The fourth working coil 106d and the fifth working coil 106e may be disposed on/in an upper portion of the third base plate 108c.

A third light source unit 1043c corresponding to the fourth working coil 106d and the fifth working coil 106e may be further disposed on/in the upper portion of the third base plate 108c. On/In the upper portion of the third base plate 108c, the fourth working coil 106d, the fifth working coil 106e and the third light source unit 1043c may be consecutively disposed. The third base plate 108c may have a through hole 1081c for installing the third light source unit 1043c.

The case 102 may have a plurality of mounting portions 1021 for mounting the plurality of base plates 108a, 108b, 108c in portions of an outer circumferential surface of the case 102. The mounting portions 1021 are bent inside the inner space of the case. That is, edges of the plurality of base plates 108a, 108b, 108c may be mounted onto tops of the plurality of mounting portions 1021. Accordingly, the plurality of base plates 108a, 108b, 108c may be disposed at the middle end of the case 102.

A bracket 210 may be disposed in a central portion of a lower end of the case 102. The bracket 210 may be disposed in a central portion of a lower side of the first base plate 108a, and may prevent a bend (i.e., sagging of the first base plate 108a), caused by weight of the first base plate 108a. The weight of the first base plate 108a may include the weight of the first working coil 106a on/in the upper portion of the first base plate 108a.

At least one elastic member 220 may be disposed on the bracket 210. For example, the elastic member 220 may be a leaf spring. An upper end of at least one elastic member 220 may contact the lower surface of the first base plate 108a, and may prevent a bend of the first base plate 108a. In the above configuration, the central portion of the first base plate 108a on which the first working coil 106a is disposed may sag further than any other area, due to the weight of the first working coil 106a. So, the bracket 210 and at least one elastic member 220 may form a supporter 200.

To solve the problem, the elastic member 220 disposed at the upper end of the bracket 210 according to the disclosure may be disposed to support the central portion of the lower surface of the first base plate 108a.

Alternatively, the elastic member 220 disposed at the upper end of the bracket 210 may be disposed to support a portion under a central portion of the first working coil 106a, while a portion under the area where the first working coil 106a is disposed.

Additionally, among the working coils 106a, 106b, 106c, 106d, 106e, the weight of the first working coil 106a formed into a dual-type working coil is heavier than any other working coil (the second, third, fourth and fifth working coils 106b, 106c, 106d, 106e). Accordingly, the elastic member 220 at the upper end of the bracket 210 may support the lower surface of the first base plate 108a on a lower side of the first working coil 106a.

The driving circuit 110a, 110b, 110c may control driving of the working coils 106a, 106b, 106c, 106d, 106e that are heating units, and may further control driving of components such as the input interface 1041 and the like of the electric range 100.

The driving circuit 110a, 110b, 110c may include various components in relation to the driving of the working coils 106a, 106b, 106c, 106d, 106e. The components may include a power supply configured to supply AC power, a rectifier configured to rectify AC power of the power supply into DC power, an inverter configured to convert DC power, rectified by the rectifier, into resonance current as a result of a switching operation and supply the resonance current to the working coil 106, a microcomputer (i.e., a micom) configured to control the inverter and components in relation to driving of the inverter, a relay or a semiconductor switch configured to turn on or turn off the working coils 106a, 106b, 106c, 106d, 106e, and the like.

The driving circuit 110a, 110b, 110c may include a first driving circuit 110a, a second driving circuit 110b, and a third driving circuit 110c. The first driving circuit 110a may be disposed on a right side of the lower end of the case 102 with respect to the bracket 210 and may control driving of the first working coil 106a. The second driving circuit 110b may be disposed on a right side of the first driving circuit 110a and may control driving of the second working coil 106b and the third working coil 106c. The third driving circuit 110c may be disposed on a left side of the lower end of the case 102 with respect to the bracket 210 and may control driving of the fourth working coil 106d and the fifth working coil 106e.

The heat sink 112a, 112b, 112c may be disposed over a portion of the driving circuit 110a, 110b, 110c and may prevent an increase in temperatures of components disposed in a portion of the driving circuit 110a, 110b, 110c.

The heat sink 112a, 112b, 112c may include a first heat sink 112a, a second heat sink 112b, and a third heat sink 112c. The first heat sink 112a may prevent an increase in temperatures of components installed in a portion of the first driving circuit 110a, the second heat sink 112b may prevent an increase in temperatures of components installed in a portion of the second driving circuit 110b, and the third heat sink 112c may prevent an increase in temperatures of components installed in a portion of the third driving circuit 110c.

The power feeder 114 may supply an external power source to the electric range 100. The power feeder 114 may be implemented as a terminal block.

The power feeder 114 may be disposed at any one of edges of the lower end of the case 102. For example, the power feeder 114 may be disposed at an upper end of the left side of the lower end of the case 102.

The filter circuit 116a, 116b, 116c may be disposed at any one of the edges of the lower end of the case 102, and may reduce noise made by the plurality of working coils 106a, 106b, 106c, 106d, 106e.

The filter circuit 116a, 116b, 116c may include a first filter circuit 116a, a second filter circuit 116b, and a third filter circuit 116c.

The first filter circuit 116a may reduce noise made by the first working coil 106a. The second filter circuit 116b may reduce noise made by the second working coil 106b and the third working coil 106c. The third filter circuit 116c may reduce noise made by the fourth working coil 106d and the fifth working coil 106e.

The air blowing fan 118a, 118b, 118c may pull down a temperature inside the case 102. Accordingly, the air blowing fan 118a, 118b, 118c may lower a temperature of various components installed in the driving circuit 110a, 110b, 110c.

The air blowing fan 118a, 118b, 118c may include a first air blowing fan 118a, a second air blowing fan 118b, and a third air blowing fan 118c.

The first air blowing fan 118a may cool various components installed in the first driving circuit 110a and may further cool the light source unit 1043 corresponding to the first working coil 106a. In particular, the first air blowing fan 118a may deliver air (wind) for cooling to the first heat sink 112a over the first driving circuit 110a.

The second air blowing fan 118b may cool various components installed in the second driving circuit 110b and may further cool the light source unit 1043 corresponding to the second working coil 106b and the third working coil 106c. In particular, the second air blowing fan 118b may deliver air for cooling to the second heat sink 112b over the second driving circuit 110b.

The third air blowing fan 118c may cool various components installed in the third driving circuit 110c and may further cool the light source unit 1043 corresponding to the fourth working coil 106d and the fifth working coil 106e. In particular, the third air blowing fan 118c may deliver air for cooling to the third heat sink 112c over the third driving circuit 110c.

The air blowing fan 118a, 118b, 118c may not be provided with a structure for preventing a foreign substance from contacting the air blowing fan 118a, 118b, 118c.

The air guide 120a, 120b, 120c may guide air (wind) generated by the air blowing fan 118a, 118b, 118c.

The air guide 120a, 120b, 120c may include a first air guide 120a, a second air guide 120b and a third guide 120c.

The first air guide 120a may be disposed to encircle the first heat sink 112a installed over a portion of the first driving circuit 110a and may guide (deliver) air, output from the first air blowing fan 118a, to the first heat sink 112a.

The second air guide 120b may be disposed to encircle the second heat sink 112b installed over a portion of the second driving circuit 110b and may guide air, output from the second air blowing fan 118b, to the second heat sink 112b.

The third air guide 120c may be disposed to encircle the third heat sink 112c installed over a portion of the third driving circuit 110c and may guide air, output from the third air blowing fan 118c, to the third heat sink 112c.

FIG. 6 is a perspective view showing an electric range having supporters according to the present disclosure.

Referring to FIGS. 1 to 5, the electric range 100 according to the disclosure may include a case 102, a base plate 108a, 108b, 108c (see FIG. 3), a working coil 106a, 106b, 106c, 106d, 106e, and a supporter 200, as described above.

An upper portion of the case 102 may be open. The case 102 may have a square shape and include four walls 102a and one bottom surface 102b.

Referring to FIG. 3, the base plate 108a, 108b, 108c may include first, second and third base plates 108a, 108b, 108c.

The working coil 106a, 106b, 106c, 106d, 106e may include first, second, third, fourth and fifth working coils 106a, 106b, 106c, 106d, 106e.

The first working coil 106a may be disposed an upper end of the first base plate 108a. The second and third working coils 106b, 106c may be spaced a predetermined distance apart at an upper end of the second base plate 108b. The fourth and fifth working coils 106d, 106e may be spaced a predetermined distance apart at an upper end of the third base plate 108c.

The first, second and third base plates 108a, 108b, 108c may be disposed in a way that the first, second and third base plates 108a, 108b, 108c are adjacent to each other. The first, second and third base plates 108a, 108b, 108c may be disposed at an upper end of the case 102.

The supporter 200 may be disposed in an inner space of the case 102. A plurality of supporters 200 described above may be provided. Each of the plurality of supporters 200 may support a lower end of each of the first, second and third base plates 108a, 108b, 108c.

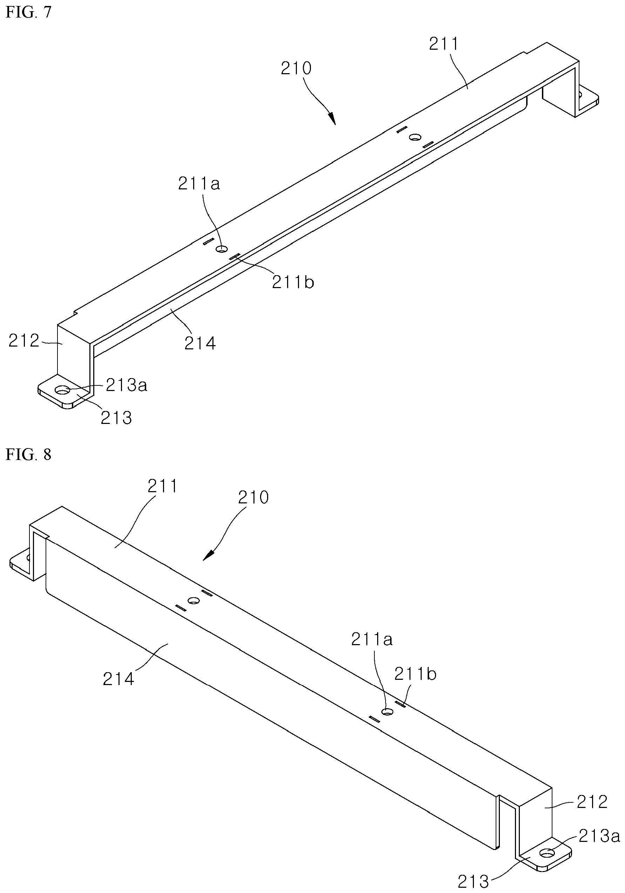

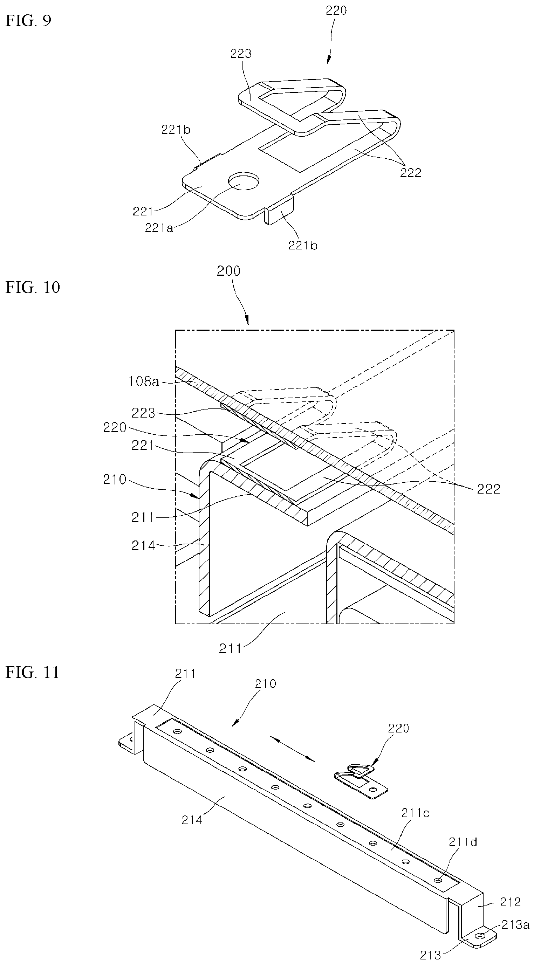

FIG. 7 is a perspective view showing a bracket according to the present disclosure. FIG. 8 is another perspective view showing the bracket according to the present disclosure. FIG. 9 is a perspective view showing an elastic member according to the present disclosure.

A configuration of the supporter 200 according to the disclosure is described with reference to FIGS. 6 and 9.

The supporter 200 may include a bracket 210 and an elastic member 220.

The bracket 210 may have a predetermined length and a predetermined width.

The bracket 210 may include a bracket body 211 and a pair of support bodies 212. The bracket body 211 may be formed to have a length that is less than an inner width of the case 102 by a predetermined length.

The first, second and third base plates 108a, 108b, 108c may be disposed at an upper end of the case 102. Lower surfaces of the first, second and third base plates 108a, 108b, 108c may have remaining exposure areas except for areas supported by the case 102.

A width of the exposure area may substantially correspond to a width supported by the supporter 200.

Accordingly, a length of the bracket body 211 according to the disclosure may be the same as or less than the width of the exposure area by a predetermined width.

The pair of support bodies 212 may bend along a downward direction at both ends of the bracket body 211. The pair of support bodies 212 may bend in a way that the pair of support bodies 212 is orthogonal to the bracket body 211.

A fixing body 213 extending outward may bend respectively at lower ends of the pair of support bodies 212.

Each of the fixing bodies 213 may bend in a way that the fixing body 213 is orthogonal to the support body 212.

Each fixing body 213 may be fixed onto the bottom surface 102b of the inner space of the above case 102.

Each of the fixing bodies 213 may have a plate shape. A width of each fixing body 213 may be the same as a width of the support body 212 and the bracket body 211. Certainly, the width of each fixing body 213 may be greater than the width of the support body 212 and the bracket body 211 to increase a surface area.

The fixing bodies 213 may have at least one coupling hole 213a. The case 102 may have another coupling hole (not illustrated) on the case 102's bottom surface 102b contacting each fixing body 213. A coupling member (not illustrated) may couple the coupling hole 213a and another coupling hole described above. Accordingly, each fixing body 213 may be fixed onto the bottom surface 102b of the inner space of the case 102. The bottom surface of the case may also a protrusion protruding upwardly to be engaged or inserted with the coupling hole to thereby fix the position of the bracket.

One or more elastic members 220 described above may be disposed at an upper end of the bracket body 211.

The one or more elastic members 220 may be disposed at one or more positions of the upper end of the bracket body 211.

Lower ends of the plurality of elastic members 220 may be fixed to the upper end of the bracket body 211. Upper ends of the plurality of elastic members 220 may elastically support the lower surface of each of the first, second and third base plates 108a, 108b, 108c.

The plurality of elastic members 220 may have the same configuration.

Each elastic member 220 may be formed into a leaf spring having a V shape. The elastic member 220 may include a fixed piece 221, an elastic piece 222 and a support piece 223.

The fixed piece 221 may be fixed to a predetermined position of the upper end of the bracket body 211. The fixed piece 221 may have a fixing hole 221a. The fixed piece 221 may have a pair of position determination projections 221b, bent along the downward direction, in both side portions thereof. The position determination projection 221b may be formed into a piece having a rectangle shape.

Another fixing hole 211a may be formed at a predetermined position of the bracket body 211. Another fixing hole 211a described above may have a pair of position determination holes 211b, in both side portions thereof. The position determination hole 211b may be formed into a hole having a rectangle shape. A fixing member (not illustrated) may be coupled to the fixing hole 221a and another fixing hole 211a described above. Accordingly, the fixed piece 221 may be fixed to the upper end of the bracket body 211. Further, the pair of position determination projections 221b may be fitted into the pair of position determination holes 211b.

The support piece 223 may be disposed above the fixed piece 221. The fixed piece 221 may support the lower surfaces of the first, second and third base plates 108a, 108b, 108c disposed on the bracket body 211.

The elastic piece 222 may have a predetermined level of elastic force. The elastic piece 222 may elastically connect the fixed piece 221 and the support piece 223. A lower end of the elastic piece 222 may connect to one end of the fixed piece 221, and the other end may connect to one end of the support piece 223. The elastic piece 222 may have a V shape that spreads apart in one direction/toward one side.

The elastic piece 222 may be formed into a body that is branched into two at one end of the fixed piece 221. The support piece 223 may connect to an upper end of the elastic piece 222, branched into two, in a plate form.

Accordingly, the lower surface of each of the first, second and third base plates 108a, 108b, 108c may be supported by the support piece 223, and the fixed piece 221 may be fixed to the upper end of the bracket body 211. Additionally, the elastic piece 222 may elastically support the lower surface of each of the first, second and third base plates108a, 108b, 108c, between the fixed piece 221 and the support piece 223.

A reinforcing body 214 may be formed at one side portion of the bracket body 211. The reinforcing body 214 may be formed integrally with the bracket body 211.

The reinforcing body 214 may be bent in a surface portion of one side of the bracket body 211 along the downward direction. The reinforcing body 214 may be bent in a way that the reinforcing body 214 is orthogonal to the bracket body 211. Certainly, an bending angle of the reinforcing body 214 is not limited to the angle at which the reinforcing body 214 is orthogonal to the bracket body 211. A single reinforcing body 214 described above may be disposed in one lateral surface portion of the bracket body 211 or a plurality of reinforcing bodies 214 described above may be provided. The reinforcing bodies 214 may be spaced a predetermined distance apart in the surface portion of one side of the bracket body 211.

A predetermined gap may be formed between a lower end of the above reinforcing body and the bottom surface 102b of the case, or the lower end of the above reinforcing body may be fixed or contact onto the bottom surface of the case.

The reinforcing body 214 may help to increase rigidity of the bracket body 211 and may prevent a bend or deformation of the bracket body 211 itself having a predetermined length.

Though not illustrated in the drawings, the reinforcing body 214 according to the present disclosure may be symmetrically formed in surface portions of one side and the other side of the bracket body 211.

The reinforcing body 214 according to the disclosure may also be formed to protrude from a center of a lower end of the bracket body 211 downward.

The reinforcing member 214 according to the disclosure may also be formed as a protruding object having a grid shape, at the lower end of the bracket body 211.

The above bracket 210 according to the present disclosure may be fixed onto the bottom surface of the inner space of the case 102. Additionally, the elastic members 220 disposed at an upper end of the bracket 210 may support the lower surfaces of the base plate 108a, 108b, 108c. In this case, fixation of the position of the bracket 210 may be an important factor.

Though not illustrated in the drawings, a pair of mounting grooves may be further formed on the bottom surface of the case 102 according to the disclosure. The pair of mounting grooves may have a predetermined depth from the bottom surface of the case 102.

The pair of fixing bodies 213 described above may be inserted into and mounted onto the pair of mounting grooves. The pair of mounting grooves may have a shape corresponding to a shape of the fixing bodies 213. Since each fixing body 213 is fitted into and fixed to each mounting groove at both ends of the bracket body 211, deformation of the bracket 210 itself may be prevented. The fixing body 213 mounted onto the mounting groove may be fixed through an additional fixing member such as a bolt.

FIG. 10 is a perspective view showing a configuration in which a supporter 200 according to the present disclosure elastically supports a lower portion of a base plate 108.

Referring to FIGS. 6 and 10, a plurality of supporters 200 according to the disclosure may respectively provide an elastic support to the lower surface of each of the first, second and third base plates108a, 108b, 108c. The first base plate 108a is described as an example.

Both ends of the bracket body 211 having a predetermined length may be fixed onto the bottom surface 102b of the inner space of the case 102 by the support body 212 and the fixing body 213, respectively. The bracket body 211 may be spaced a predetermined distance apart from the bottom surface 102b depending on a height of the support body 212.

The bracket body 211 may have a predetermined length and may be disposed under/below the first base plate 108a along a widthwise direction of the first base plate 108a.

The one or more elastic members 220 disposed at the one or more positions of the upper end of the bracket body 211 may elastically support one or more positions of the lower surface of the first base plate 108a. Each of the elastic members 220 according to the disclosure may be formed into a leaf spring. Accordingly, when the elastic members 220 elastically support a plurality of positions of the lower surface of the first base plate 108a, a predetermined distance of elastic flow may be formed by the elastic members 220 along an up-down direction.

With the above configuration, the supporter 200 according to the disclosure may support a plurality of positions of the lower surface of the first base plate 108a along the widthwise direction of the first base plate 108a.

When the first working coil 106a is disposed at the upper end of the first base plate 108a, the supporter 200 according to the disclosure may prevent a downward bend of a central portion of the first base plate 108a, caused due to the weight of the first working coil 106a.

Further, the supporter 200 according to the disclosure may be provided with the elastic member 220. Accordingly, when an external impact is applied to the first base plate 108a, the supporter 200 may absorb an impulsive force caused by the external impact.

Positions supported by the elastic members 200 according to the disclosure may correspond to positions of the first base plate 108a under the area in which the first working coil 106a is disposed. Accordingly, the elastic members 200 according to the disclosure may stably support the first working coil 106a. Certainly, positions of the elastic members 200 supporting the lower surfaces of the second and third base plates 108b, 108c may also correspond to positions under the area in which the corresponding working coils are disposed.

FIG. 11 is view showing an example in which a position of an elastic member according to the present disclosure can change at an upper end of a bracket.

Referring to FIG. 11, a guide groove 211c may be formed at the upper end of the bracket body 211 according to the disclosure.

The fixed piece 221 of each elastic member 220 according to the disclosure may be coupled to the guide groove 211c in a rail form. A fixing hole 221a may be formed at the fixed piece 221. The above position determination projection 221b may be removed from the fixed piece 221.

A plurality of other fixing holes 211d may be spaced a predetermined distance apart from each other in the guide groove 211c.

The elastic member 220 may move along the guide groove 211c linearly. A position of the elastic member 220 may change. When the fixing hole 221a of the fixed piece 221 is aligned with any one of the other fixing holes 211d at a position to which the elastic member 220 moves, the fixing hole 211a and any one of the other fixing holes 211d may be fixed through a fixing member (not illustrated).

Accordingly, the elastic member 220 may be changed linearly in its position on the bracket body 211 and may be fixed to the position to which the elastic member 220 moves.

With the above configuration, a support position on a lower surface of a corresponding base plate may change depending on a size of a working coil, according to the present disclosure.

Though not illustrated in the drawings, at least one elastic element (not illustrated) may be disposed on/over the air guide 120a, 120b, 120c.

The elastic element may be a leaf spring. Certainly, the elastic element may also be an elastic object such as rubber or sponge alternatively or in addition to a leaf spring.

An upper end of at least one elastic element described above may contact the lower surface of the base plate 108a, 108b, 108c and prevent a bend of the base plate 108a, 108b, 108c.

A guide groove for guiding a position of movement of at least one elastic element described above may be further formed at an upper end of the air guide. Accordingly, at least one elastic element described above may move to a predetermined position. As a result, a position of the lower surface of the base plate, elastically supported by the elastic element, may change.

Additionally, a position supported by the elastic element may be a position included in a surface area of a working coil disposed at the upper end of the base plate, for example.

According to the present disclosure, a lower portion of a base plate on which a working coil is disposed may be supported to a predetermined length, thereby preventing sagging of the base plate, as described above with reference to the examples.

According to the present disclosure, a constant gap between an object to be heated and a working coil may be maintained, thereby preventing heat generation of the working coil as well as ensuring uniformity in heating of the object to be heated.

According to the present disclosure, an elastic member may elastically support a lower portion of a base plate on which a working coil is disposed, thereby absorbing an external impact applied to the base plate.

According to the present disclosure, a bracket itself, which supports a lower portion of a base plate, may be reinforced, thereby preventing deformation of the bracket.

The embodiments are described above with reference to a number of illustrative embodiments thereof. However, the present disclosure is not intended to limit the embodiments and drawings set forth herein, and numerous other modifications and embodiments can be devised by one skilled in the art without departing from the technical concept of the disclosure. Further, the effects and predictable effects based on the configurations in the disclosure are to be included within the range of the disclosure though not explicitly described in the description of the embodiments.

**[list of reference signs]**

| | |
|---|---|
| 100: Electric range | 102: Case |
| 1021: Mounting portion | 1023a: 1-1th through hole |
| 1023b: 1-2th through hole | 1023c: 1-3th through hole |
| 1024a: 2-1th through hole | 1024b: 2-2th through hole |
| 1024c: 2-3th through hole | 104: Cover plate |
| 1041: Input interface | 1042a: First light display area |
| 1042b: Second light display area | 1042c: Third light display area |
| 1043a: First light source unit | 1043b: Second light source unit |
| 1043c: Third light source unit | 106a: First working coil |
| 106b: Second working coil | 106c: Third working coil |
| 106d: Fourth working coil | 106e: Fifth working coil |
| 108a: First base plate | 108b: Second base plate |
| 108c: Third base plate | 110a: First driving circuit |
| 110b: Second driving circuit | 110c: Third driving circuit |
| 112a: First heat sink | 112b: Second heat sink |
| 112c: Third heat sink | 114: Power feeder |
| 116a: First filter circuit | 116b: Second filter circuit |
| 116c: Third filter circuit | 118a: First air blowing fan |
| 118b: Second air blowing fan | 118c: Third air blowing fan |
| 120a: First air guide | 120b: Second air guide |
| 120c: Third air guide | 200: Supporter |
| 210: Bracket | 211: Bracket body |
| 212: Support body | 213: Fixing body |
| 220: Elastic member | 221: Fixed piece |
| 222: Elastic piece | 223: Support piece |

## Claims

1. An electric range, comprising:
a case (102) being open at an upper portion of the case (102), the case (102) provides an inner space;
a bottom surface (102b) of the inner space of the case (102);
a base plate (108) disposed inside the case (102) separating the inner space of the case (102) into the upper portion and a lower portion;
a working coil (106) disposed in the upper portion on the base plate (108); and
a supporter (200) disposed in the lower portion on the bottom surface (102b) of the inner space of the case (102), wherein the supporter (200) is configured to support a lower end of the base plate (108).

2. The electric range of claim 1, wherein the supporter (200) extends along a widthwise direction of the base plate (108).

3. The electric range of claim 1 or 2, wherein the supporter (200) comprises at least one of:
a bracket (210) both ends of which are supported by the bottom surface (102b) of the inner space of the case, and
one or more elastic members (220) disposed at one or more positions of an upper end of the bracket (210) and configured to elastically support a lower surface of the base plate facing the bottom surface of the case (102), preferably the bracket (210) has a linear shape.

4. The electric range of claim 3, wherein the bracket (210) comprises:
a bracket body (211) having a predetermined length and width and having a linear shape, wherein the one or more elastic members (220) are disposed at an upper end of the bracket body (211), and
a support body (212) bent at both ends of the bracket body (211), respectively, wherein the support bodies (212) are fixed onto the bottom surface (102b) of the inner space of the case.

5. The electric range of claim 4, wherein a fixing body (213) is formed at lower ends of the support body (212), respectively, wherein the fixing body (213) is formed in a plate shape and having a coupling hole (213a), wherein the fixing body (213) is fixed onto the bottom surface (102b) by a coupling member passing through the coupling hole (213a).

6. The electric range of claim 4 or 5, wherein the bracket body (211) has a reinforcing body (214) having a plate shape and bent in downward direction.

7. The electric range of claim 6, wherein the reinforcing body (214) is formed at at least one side surface of the bracket body (211) and/or a lower end of the reinforcing body (211) is spaced a predetermined distance apart from the bottom surface (102b) of the inner space of the case (102).

8. The electric range of any one of the preceding claims, wherein each of the one or more elastic members (220) is formed as a leaf spring spreading apart in a V shape.

9. The electric range of any one of the preceding claims, wherein a position of each of the one or more elastic members (220) is changeable along a guide groove (211c) formed on the upper end of the bracket (210).

10. The electric range of any one of the preceding claims, wherein each of the one or more elastic members (220) includes at least one position determination projection (221b) being bent downwardly and being configured to be inserted into a position determination hole (211b) formed in the bracket body (211).

11. The electric range of any one of the preceding claims, wherein a plurality of supporters (200) are provided to support different positions of the lower end of the base plate (108).

12. The electric range of any one of the preceding claims, wherein a plurality of base plates (108a, 108b, 180c) are provided is adjacent to each other at the upper portion of the case (102), wherein each of the base plates (108a, 108b, 108c) is supported at its lower surface by one supporter (200).

13. The electric range of any one of the preceding claims, further comprising at least one air guide (120a, 120b, 120c) disposed in the inner space of the case, wherein an upper end of the air guide (120a, 120b, 120c) supports a bottom surface of the base plate (108).

14. The electric range of any one of the preceding claims, wherein the working coil (106) is disposed in a central portion of the base plate (108), wherein the supporter (200) is disposed to support a lower end of the central portion of the base plate (108).

15. The electric range of any one of the preceding claims, further comprising a cover plate (104) coupled to an upper end of the case (102) to shield an inside of the case (102), wherein the cover plate (104) is configured to place an object to be heated on an upper surface of the cover plate (104) .
